# EUROPÄISCHE PATENTSCHRIFT

(11) **EP 0 339 357 B1**
(45) Veröffentlichungstag und Bekanntmachung des Hinweises auf die Patenterteilung: **23.06.1993**
(21) Anmeldenummer: 89106386.9
(22) Anmeldetag: 11.04.1989
(51) Int. Cl.: B26B 7/00, B26B 27/00

(54) **Schneidmesser**
Cutting tool
Outil de coupe

(30) Priorität: 29.04.1988 DE 3814554
(43) Veröffentlichungstag der Anmeldung: 02.11.1989
(73) Patentinhaber: C. & E. FEIN GmbH & Co., D-70176 Stuttgart (DE)
(72) Erfinder:
(74) Vertreter: Witte, Alexander, Dr.-Ing.

(56) Entgegenhaltungen:
- EP-A- 0 081 199
- EP-A- 0 141 035
- EP-A- 0 174 427
- DE-C- 3 324 676
- US-A- 3 488 843
- US-A- 3 965 575

## Beschreibung

Die Erfindung betrifft ein Schneidmesser für ein Schneidwerkzeug mit einem schwenkoszillierenden Antrieb, insbesondere zum Durchtrennen von Fugendichtungen oder Isolierungen bei Glasscheiben, wobei das Schneidmesser ein Halteteil zur Befestigung am Antrieb und ein Klingenteil umfaßt.

Gattungsgemäße Schneidmesser sind z.B. aus der EP-A-0 174 427 oder der EP-A-0 141 035 bekannt und werden insbesondere auch zum Durchtrennen der Klebeschicht einer angeklebten Scheibe, beispielsweise bei Kraftfahrzeugen, verwendet, bei denen insbesondere die Frontscheiben zur Erzielung eines günstigeren Luftwiderstandsbeiwerts an die Karosserie angeklebt sind. Die Schneidwerkzeuge mit Oszillationsantrieb ermöglichen ein recht zügiges Durchtrennen dieser Klebeschicht, so daß der Austausch solcher beschädigter Scheiben rasch vonstatten geht. Wegen der bei dem Durchtrennen der Klebeschicht auftretenden Kräfte ist es notwendig, einen qualitativ hochwertigen Stahl für die Klinge zu verwenden. Die bisherigen Schneidmesser wurden unter anderem auch wegen der bei dem Schneiden auftretenden Kräfte einstückig ausgebildet. Dies hat zur Folge, daß wegen den verwendeten hochwertigen Materialien der Preis einer Austauschklinge relativ hoch ist.

Deshalb stellt sich die Erfindung die Aufgabe, die Erneuerung der Schneidmesser wirtschaftlicher zu machen.

Diese Aufgabe wird bei einem Schneidmesser der eingangs beschriebenen Art erfindungsgemäß dadurch gelöst, daß das Klingenteil an dem Halteteil auswechselbar befestigt ist.

Aus dem Stand der Technik sind zwar Schneidmesser mit auswechselbaren Klingen bekannt, so z. B. aus der EP-A 81 199, jedoch handelt es sich hierbei stets um von Hand geführte Messer, bei denen Kräfte, wie sie bei dem Schneidmesser für Schneidwerkzeuge mit Oszillationsantrieb auftreten, nicht vorkommen. Überraschenderweise ergeben sich auch dadurch keine Probleme, wenn das Klingenteil in eine Klebeschicht taucht, wo es keinerlei Führung erfährt.

Die größere Wirtschaftlichkeit des erfindungsgemäßen Schneidmessers ergibt sich zum einen dadurch, daß der Klingenteil auswechselbar ist, d.h. das Teil, das verworfen werden muß, betrifft nur noch einen Teil des Schneidmessers und zum anderen kann das Halteteil aus einem preisgünstigeren Material hergestellt werden, da dieses nicht unbedingt aus dem hochwertigen Klingenstahl bestehen muß.

Bei einer besonders bevorzugten Ausführungsform der Erfindung lassen sich Messerklingen aus Teppichmessern als Klingenteile verwenden. Diese sind nicht nur sehr preiswert, sondern außerdem überall erhältlich. Zusätzlich können auch beide Enden dieser Teppichmesserklingen durch einfaches Umdrehen der Klinge genutzt werden.

Das Klingenteil kann dabei so ausgebildet sein, daß es nur mit dem dem Antrieb abgewandten Ende des Halteteils überlappt und daran befestigt ist.

Alternativ dazu kann das Klingenteil auch einen Endbereich aufweisen, der mit dem Halteteil überlappt und eine Bohrung zur Aufnahme der Antriebswelle aufweist. Auch das Halteteil weist bei dieser Ausführung eine Bohrung zur Aufnahme der Antriebswelle auf, welche als Mehrkantbohrung oder als runde Bohrung ausgebildet sein kann, in der ein entsprechendes Ende der Antriebswelle geführt ist.

Das dem Endbereich gegenüberliegende Ende des Klingenteils bildet dann die eigentliche Schneideklinge und steht über das Halteteil hinaus.

Eine weitere Möglichkeit zur Anbringung des Klingenteils an dem Halteteil ist die Verwendung eines Zwischenstücks, an dem das Halteteil oder das Klingenteil oder auch beide auswechselbar befestigt sind.

Bei einer bevorzugten Ausführungsform des Schneidmessers ist benachbart zur Schneide des Klingenteils ein Stützanschlag angeordnet. Dies kann sowohl am Halteteil als auch am Klingenteil erfolgen. Bevorzugt wird der Stützanschlag aus weichem Material gebildet, so daß das Schneidmesser beispielsweise an der Fahrzeugkarosserie beim Schneidevorgang anliegen kann, ohne daß die Karosserie dadurch beschädigt wird. Als Material kommt hier insbesondere Kunststoff in Frage, der jedoch eine ausreichende mechanische Festigkeit haben muß, um den auftretenden mechanischen Belastungen während dem Betrieb des Messers standzuhalten.

Bevorzugte Schneidmesser sind in ihrer Längsrichtung zweimalig gegenläufig abgewinkelt, so daß sich ein abgekröpftes Klingenteil ergibt. Bei dieser Ausführungsform kann das Klingenteil lediglich an dem abgekröpften Teil des Halteteils angeordnet sein oder aber auch selbst eine abgekröpfte Form aufweisen, wobei dann das Klingenteil bevorzugt bis zur Antriebswelle des Schneidwerkzeugs reicht und an dieser gehalten ist.

Bei dem in Längsrichtung zweimal gegenläufig abgewinkelten Messer verläuft das freie Ende des Klingenteils bevorzugt leicht geneigt zur Ebene des Halteteils im Bereich der Antriebswelle, beispielsweise unter einem Winkel von ca. 15°.

In allen Fällen sollte der Stützanschlag eine etwas größere Breite als die den Stützanschlag tragende Fläche aufweisen, um so sicherzustellen, daß das Schneidmesser in jeder Arbeitsposition von dem Stützanschlag an der Karosserie geführt werden kann.

Bei einer weiteren bevorzugten Variante des Schneidmessers ist vorgesehen, daß das Messer in Längsrichtung U-förmig zurückgebogen ist. Das U-förmige Teil des Messers kann dabei durch eine zweimalige gleichsinnige Abwinkelung realisiert sein oder auch in einer durch einen Radius charakterisierte Umbiegung. Insbesondere bei Verwendung dieses Messers mit einem Stützanschlag ist es vorteilhaft, wenn der Stützanschlag im Bereich der Umbiegung des Messers angeordnet ist. Vorteilhaft ist hier ein stetiger Übergang des Stützanschlags in die Abwinkelung des Messers.

Bevorzugt werden das Klingenteil und das Halteteil mittels eines Führungselements und eines Sicherungselements miteinander verbunden.

Das Führungselement kann dabei einstückig mit dem Klingenteil oder dem Halteteil ausgebildet sein.

Ebenso kann das Sicherungselement einstückig mit dem Klingenteil oder dem Halteteil ausgebildet sein. Ein Beispiel für ein einstückig angeformtes Sicherungselement an das Klingenteil ist ein sich bis zur Antriebswelle erstreckendes Klingenteil mit einer Bohrung, die die Antriebswelle des Schneidwerkzeugs aufnimmt. Hierbei wird das Klingenteil flächig auf dem Halteteil mittels des oder den Führungselementen festgelegt, während eine Verschiebung des Klingenteils gegenüber dem Halteteil durch das Sicherungselement, d.h. durch die Bohrung im wellenseitigen Ende des Klingenteils zur Aufnahme der Antriebswelle, verhindert wird.

Die Führungselemente werden bevorzugt längsseits an das Klingenteil oder an das Halteteil angeformt, wobei das jeweils andere Teil zumindest in dessen Randbereich von den Führungselementen umgriffen wird und so in Längsrichtung verschieblich gehalten wird.

Alternativ können die Führungselemente auch aus Hakenteilen bestehen, die am Halte- oder Klingenteil befestigt sind, und die in Ausnehmungen im jeweils anderen Teil eingreifen. Die Hakenteile können dabei beispielsweise als Stift mit einem Kopfteil ausgebildet sein oder auch als aus der Ebene des Halte- oder Klingenteils herausstehende zweifach gegensinnig abgewinkelte Laschen sein.

Bei bevorzugten Ausführungsformen der Schneidmesser ist das Halteteil und/oder das Klingenteil konisch ausgebildet, wobei das verjüngte Ende zur Messerspitze hinweist. Mit solchermaßen ausgebildeten Schneidmessern, die zudem bevorzugt an beiden Längsrichtungen des Klingenteils Schneidflächen aufweisen, ist ein Einsetzen des Messers in die aufzutrennende Dichtung besonders leicht zu bewerkstelligen.

Eine zweckmäßige Ausgestaltung des Schneidmessers ist darin zu sehen, daß das Sicherungselement im Überlappungsbereich von Halteteil und Klingenteil rastbar befestigbar ist, wobei das Sicherungselement das Halte- und das Klingenteil umgreift. Bei dieser Konstruktion des Sicherungselements wird bevorzugt das Sicherungselement gleichzeitig als Stützanschlag ausgebildet und wird auch in diesem Fall bevorzugt aus Kunststoff hergestellt sein.

Das Sicherungselement wird dabei vorzugsweise über Klemmmittel, wie z.B. einen Exzenterhebel oder eine Klemmschraube an dem Schneidmesser festgelegt.

Bei einem besonders bevorzugten Ausführungsbeispiel ist vorgesehen, daß das Halteteil eine formschlüssige Aufnahme für das Fixierungsteil des Klingenteils aufweist.

Insbesondere ist diese formschlüssige Aufnahme so ausgebildet, daß sie das Fixierungsteil drehfest lagert.

Im Rahmen der vorliegenden Erfindung ist es besonders wichtig, daß das Klingenteil ohne Spiel mit dem Halteteil verbunden ist. Aus diesem Grund ist es vorteilhaft, wenn die Aufnahme das Fixierungsteil an mindestens zwei in Längsrichtung des Klingenteils im Abstand voneinander angeordneten Punkten abstützt. Eine derartige Verbindung ist auch wegen der Stabilität für einen Langzeitgebrauch geeignet, da sie eine geringere Neigung zum Ausschlagen bietet.

Zusätzlich kann es aber aber auch noch von Vorteil sein, wenn die Aufnahme einen eine Ausnehmung im Fixierungsteil durchgreifenden Vorsprung aufweist.

Eine besonders hohe mechanische Stabilität läßt sich dann erreichen, wenn die Aufnahme an Längsseitenflächen des Fixierungsteils anliegende Anschlagflächen aufweist, so daß die Kraft vom Halteteil auf das Klingenteil über möglichst große Flächen übertragen werden kann und sich daher auch wieder die Gefahr eines Ausschlagens reduziert.

Darüber hinaus ist es, um jegliches Spiel zu vermeiden, vorteilhaft, wenn das Fixierungsteil von den Anschlagflächen paßgenau gehalten ist.

Einen weiteren Vorteil bietet ein Ausführungsbeispiel, bei welchem vorgesehen ist, daß das Klingenteil in der Aufnahme zwei unterschiedlichen Stellungen einsetzbar ist, so daß das Merkmal der Auswechselbarkeit des Klingenteils gleichzeitig noch dazu genutzt werden kann, zwei unterschiedliche oder zumindest teilweise unterschiedliche Messertypen mit einem Halteteil und ein und derselben Klinge zu erhalten.

Eine bevorzugte Möglichkeit sieht dabei vor, daß das Klingenteil mit unterschiedlicher Erstreckung von dem Halteteil weg in die Aufnahme einsetzbar ist.

Bei sämtlichen bisher beschriebenen Ausführungsbeispielen wurde nicht im einzelnen darauf eingegangen, wie vorteilhafterweise die Aufnahme ausgebildet sein könnte, insbesondere nicht, wie die Aufnahme ausgebildet sein könnte, um eine möglichst spielfreie Verbindung zwischen Klingenteil und Halteteil zu erreichen. So sieht ein bevorzugtes Ausführungsbeispiel vor, daß die Aufnahme durch ein Basisteil des Halteteils und einem auf dem Basisteil befestigbaren Auflageteil gebildet ist und daß das Klingenteil zwischen dem Auflageteil und dem Basisteil fixierbar ist. D.h., daß sich das Klingenteil zwischen dem Auflageteil und dem Basisteil einspannen läßt. Um bei einer derartigen Gestaltung der Aufnahme ein Halten des Klingenteils mit Spiel zu verhindern, ist vorgesehen, daß das Basisteil und das Auflageteil durch Formschluß drehfest verbindbar sind, so daß keine Relativbewegung des Auflageteils zum Basisteil erfolgen kann und ein hierin begründetes Spiel von vornherein eliminiert ist.

Eine Möglichkeit ist dabei, daß der Formschluß mittels parallel zur Längsrichtung des Klingenteils und parallel zueinander verlaufender Formschlußflächen erfolgt.

Eine Alternative oder zusätzliche Möglichkeit ist außerdem darin zu sehen, daß der Formschluß mittels in Längsrichtung des Klingenteils konisch zueinander verlaufender Formschlußflächen erfolgt. Die konisch zueinander verlaufenden Formschlußflächen haben besonders den Vorteil, daß sie das Erreichen eines Paßsitzes in einfacher Weise zulassen.

Zum Erreichen eines derartigen Paßsitzes der Formschlußflächen ist bei einem bevorzugten Ausführungsbeispiel vorgesehen, daß die Formschlußflächen durch eine am Basisteil oder am Auflageteil angeordnete Schrägfläche und ein auf dieser gleitendes, am Auflageteil oder am Basisteil angeordnetes Gleitteil in Richtung eines Paßsitzes beaufschlagbar sind.

Hierbei ist es besonders zweckmäßig, wenn die Schrägfläche schräg zu einer Aufsetzrichtung des Auflageteils verläuft.

Ferner ist es, um den Paßsitz durch eine elastische Kraftkomponente aufrecht zu erhalten, vorteilhaft, wenn das auf die Schrägfläche aufgleitende Gleitteil elastisch deformierbar ist.

Um das erfindungsgemäße Schneidmesser auch noch mit einem Stützanschlag zu versehen, ist es vorteilhaft, wenn das Halteteil den Stützanschlag trägt, da somit eine Senkung der Kosten dadurch erreicht werden kann, daß lediglich das bloße auswechselbare Klingenteil als Austauschteil geliefert werden muß, während der Stützanschlag mitsamt dem Halteteil weiter verwendet werden kann.

Hierbei ist es aus produktionstechnischen Gründen ebenfalls besonders einfach, wenn der Stützanschlag vom Basisteil getragen ist.

Weitere Merkmale und Vorteile sind Gegenstand der nachfolgenden Beschreibung sowie der zeichnerischen Darstellung einiger Ausführungsbeispiele. In der Zeichnung zeigen:
- Fig. 1: eine Draufsicht auf ein erstes Ausführungsbeispiel eines erfindungsgemäßen Schneidmessers;
- Fig. 2: eine Schnittansicht längs Linie 2-2 in Fig. 1;
- Fig. 3: eine Draufsicht auf ein zweites Ausführungsbeispiel eines erfindungsgemäßen Schneidmessers;
- Fig. 4: Einzelteile des erfindungsgemäßen Schneidmessers von Fig. 3 in Explosionsdarstellung;
- Fig. 5: eine Draufsicht auf ein drittes Ausführungsbeispiel eines erfindungsgemäßen Schneidmessers;
- Fig. 6: eine Seitenansicht des Schneidmessers in Fig. 5;
- Fig. 7: eine Draufsicht auf ein viertes Ausführungsbeispiel eines erfindungsgemäßen Schneidmessers;
- Fig. 8: eine teilweise geschnittene Seitenansicht des Schneidmessers in Fig. 7;
- Fig. 9: eine Draufsicht auf ein fünftes Ausführungsbeispiel eines erfindungsgemäßen Schneidmessers;
- Fig. 10: einen Schnitt längs Linie 10-10 in Fig. 9;
- Fig. 11: eine Draufsicht auf ein sechstes Ausführungsbeispiel eines erfindungsgemäßen Schneidmessers;
- Fig. 12: einen Schnitt längs Linie 12-12 in Fig. 11;
- Fig. 13: eine Draufsicht auf ein siebtes Ausführungsbeispiel eines erfindungsgemäßen Schneidmessers;
- Fig. 14: eine teilweise geschnittene Seitenansicht des Schneidmessers in Fig. 13;
- Fig. 15: eine Draufsicht auf ein achtes Ausführungsbeispiel eines erfindungsgemäßen Schneidmessers;
- Fig. 16: einen Schnitt längs Linie 16-16 in Fig. 15;
- Fig. 17: eine Draufsicht auf ein neuntes Ausführungsbeispiel eines erfindungsgemäßen Schneidmessers;
- Fig. 18: einen Schnitt längs Linie 18-18 in Fig. 17;
- Fig. 19: eine Draufsicht auf ein zehntes Ausführungsbeispiel eines erfindungsgemäßen Schneidmessers in Explosionsdarstellung und
- Fig. 20: einen Längsschnitt durch das zehnte Ausführungsbeispiel im zusammengesetzten Zustand.

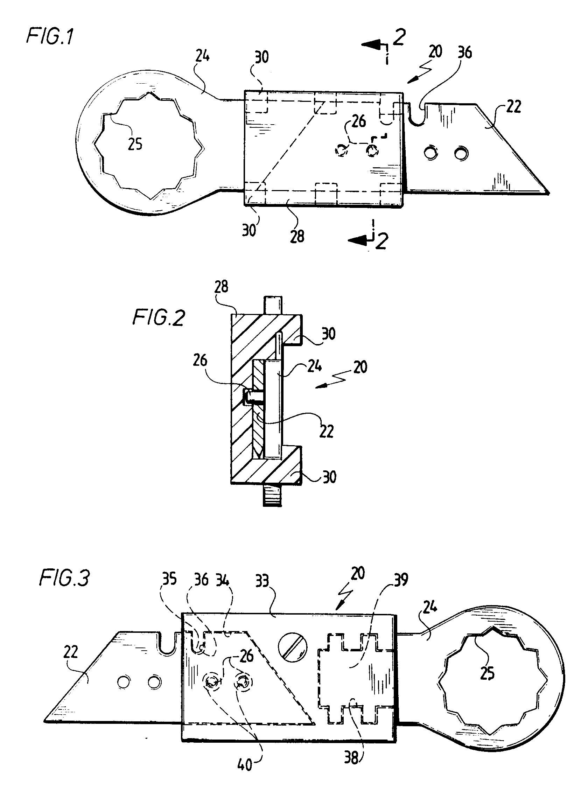

Die Figuren 1 bis 4 zeigen ein erfindungsgemäßes Schneidmesser 20, das so aufgebaut ist, daß als Klingenteil 22 ein normales Teppichmesser verwendbar ist.

Bei dem in den Figuren 1 und 2 dargestellten Schneidmesser 20 ist das Klingenteil 22 dabei an einem Halteteil 24 befestigt, das eine Mehrkantbohrung 25 zur Aufnahme einer nicht dargestellten Antriebswelle eines Schneidwerkzeugs aufnimmt.

An dem freien, von der Antriebswelle wegweisenden Ende des Halteteils 24 sind zwei Stifte 26 vorgesehen, die das aus einem Teppichmesser stammende Klingenteil 22 mit seinen komplementären Bohrungen aufnehmen und lagern kann. Das Klingenteil 22 liegt dabei flächig auf dem Halteteil 24 auf. Bevorzugt wird hierbei das Halteteil an diesem Ende eine Breite aufweisen, die identisch ist mit der Breite des Klingenteils 22.

Das Klingenteil ist durch die beiden Stifte 26 gegenüber dem Halteteil 24 gegen Verdrehungen gesichert. Ein Sicherungsbügel 28 verhindert ein Lösen des Klingenteils 22 von den Stiften 26 und übergreift das Klingenteil 22 einschließlich des Stiftes 26 und die beidseitigen Ränder des Halteteils 24 in der Art einer Manschette.

Bevorzugt wird der Sicherheitsbügel 28 aus einem Kunststoff mit ausreichender Elastizität hergestellt, so daß sich der Sicherheitsbügel mit seinen das Halteteil 24 übergreifenden Nasen 30 über das Halteteil 24 und das Klingenteil 22 einrasten läßt. Der Sicherheitsbügel 28 kann dabei gleichzeitig als Stützteil der Führung des Messers dienen. Die Verwendung von Kunststoff als Material für den Sicherheitsbügel 28 ist hierbei ausreichend, da die wesentlichen, bei der Benutzung des Messers auftretenden Kräfte von den beiden Stiften 26 aufgenommen werden und der Sicherungsbügel 28 nur der Fixierung des Klingenteils 22 an dem Halteteil 24 dient.

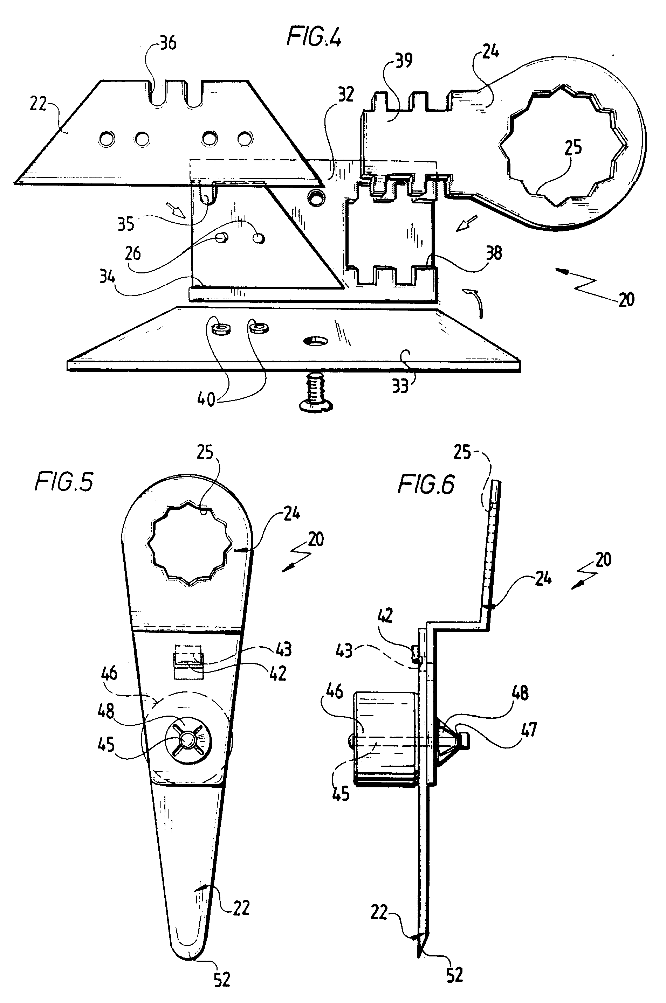

Die Figuren 3 und 4 zeigen eine andere Variante eines Schneidmessers 20 unter Verwendung eines Klingenteils 22 in Form einer aus einem normalen Teppichmesser stammenden Klinge.

Bei dieser Ausführungsform wird das Halteteil 24 über ein Zwischenstück 32 und eine Sicherungsplatte 33 mit dem Klingenteil 22 verbunden. Bevorzugt weist das Zwischenstück 32 eine Ausnehmung 34 auf, die eine formschlüssige Aufnahme von einem Ende des Klingenteils 22 ermöglicht. Die Ausnehmung 34 weist dabei einen Vorsprung 35 auf, der in eine komplementäre Kerbe 36 im Rand des Klingenteils 22 eingreift. Zusätzlich sind auch bei dieser Ausführungsform zwei Stifte 26 vorgesehen, auf die die Klinge oder das Klingenteil 22 aufgesteckt werden kann. Die Tiefe der Ausnehmung 34 entspricht dabei der Dicke des Klingenteils 22, so daß sich ein bündiger Abschluß der Klingenoberfläche mit der Oberfläche des Zwischenstücks 32 bei eingesetzter Klinge 22 ergibt.

Gegenüberliegend zu der Ausnehmung 34 weist das längliche Zwischenstück 32 eine gezahnte Ausnehmung 38 auf, die ein komplementär geformtes Ende 39 des Halteteils 24 aufnimmt. Die Zahnung der Ausnehmung bzw. des Endes 39 kann dabei so ausgebildet sein, daß sich nur eine einzige mögliche Stellung beim Einsetzen des Halteteils 24 in das Zwischenstück 32 ergibt. Nach dem Einsetzen des Klingenteils 22 und des Halteteils 24 in die Ausnehmungen 34 und 38 des Zwischenstücks 32 wird die Sicherungsplatte 33 aufgelegt und mit dem Zwischenstück 32 verschraubt. Vorzugsweise weist die Sicherungsplatte 33 zwei Bohrungen 40 auf, in die die Stifte 26 hineinragen, wodurch eine Verdrehung der Sicherungsplatte gegenüber dem Zwischenstück 32 verhindert wird, so daß ein unbeabsichtigtes Lösen der Verbindung von Klingenteil und Zwischenstück oder von Halteteil 24 und Zwischenstück 32 sicher vermieden wird.

Das Halteteil 24 ist an seinem dem Ende 39 gegenüberliegenden Ende mit einer Bohrung 25 ausgestattet, die bevorzugt als Mehrkant ausgeführt ist und so eine formschlüssige Verbindung mit der Antriebswelle ermöglicht.

Die Figuren 5 bis 14 zeigen Schneidmesser 20 mit speziell gefertigten Klingenteilen 22.

In den Figuren 5 und 6 ist eine abgekröpfte Ausführungsform des Schneidmessers 20 dargestellt, bei dem das Halteteil 24 durch die Abkröpfung in zwei Bereiche unterteilt ist, wovon der eine Bereich die Bohrung 25, bevorzugt in der Gestalt eines Mehrkants, aufweist, während der andere Führungs- und Sicherungselemente zur Befestigung des Klingenteils 22 an dem Halteteil 24 aufnimmt. Als Führungsteil ist ein aus dem Halteteil 24 ausgestanzter Haken 42 vorhanden, der in eine entsprechende Öffnung 43 des Klingenteils 22 eingreift. Gesichert wird bei diesem Ausführungsbeispiel das Klingenteil 22 an dem Halteteil 24 durch einen Bolzen 45, der an seinem einen Ende eine Stützrolle 46 trägt, deren Durchmesser bevorzugt so gewählt wird, daß die Stützrolle umfangsmäßig über die seitlichen Ränder des Klingenteils 22 und des Halteteils 24 hinaussteht.

Mit seinem anderen Ende wird der Bolzen 45 in entsprechende, fluchtende Bohrungen des Klingenteils 22 und des Halteteils 24 eingesetzt, wobei der dabei überstehende Teil des Bolzens 45 an seinem Ende eine Ringnut 47 trägt. Über dieses freie Ende des Bolzens 45 wird dann eine Klemmscheibe 48 gedrückt, deren federnde Elemente in der Ringnut 47 einrasten.

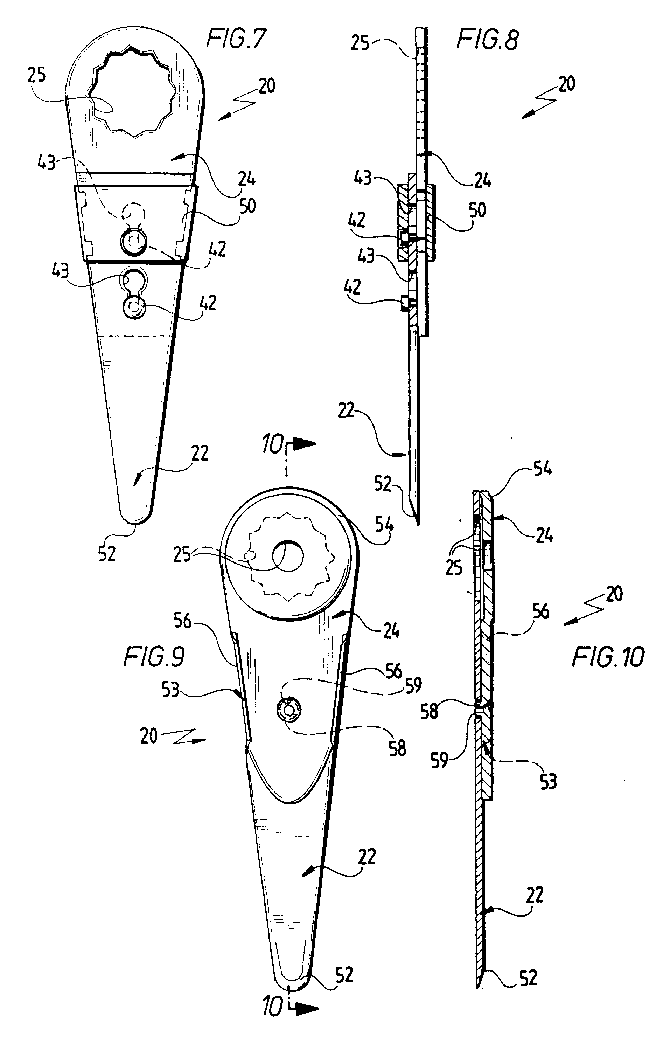

Ein flaches, nicht abgekröpftes Schneidmesser 20 ist in den Figuren 7 und 8 dargestellt, bei denen das Halteteil 24 zwei Hakenteile 42 trägt, die in diesem Fall aus flache runde Köpfe tragenden Stiften bestehen. Das Klingenteil 22 weist zwei Langlöcher auf, die an jeweils einem Ende eine kreisförmige Erweiterung aufweisen, durch die die Hakenteile 42 hindurchgesteckt werden können. Bei einer Verschiebung des Klingenteils gegenüber dem Halteteil 24 ist das Klingenteil 22 gegenüber dem Halteteil 24 abstandsmäßig festgelegt, während eine Verschiebung der beiden Teile gegeneinander in Längsrichtung des Messers durch einen Sicherungsclip 50 verhindert wird, der das Halteteil 24 und das Klingenteil 22 umgreift und über ein Hakenteil 42 in seiner Position bezüglich der Längsrichtung des Schneidmessers 20 gehalten wird.

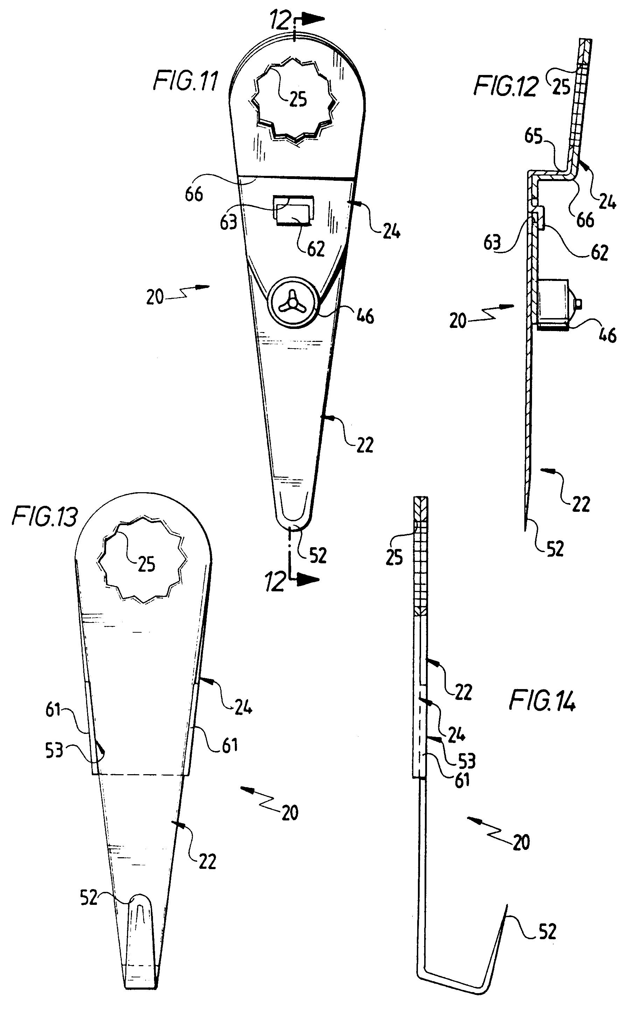

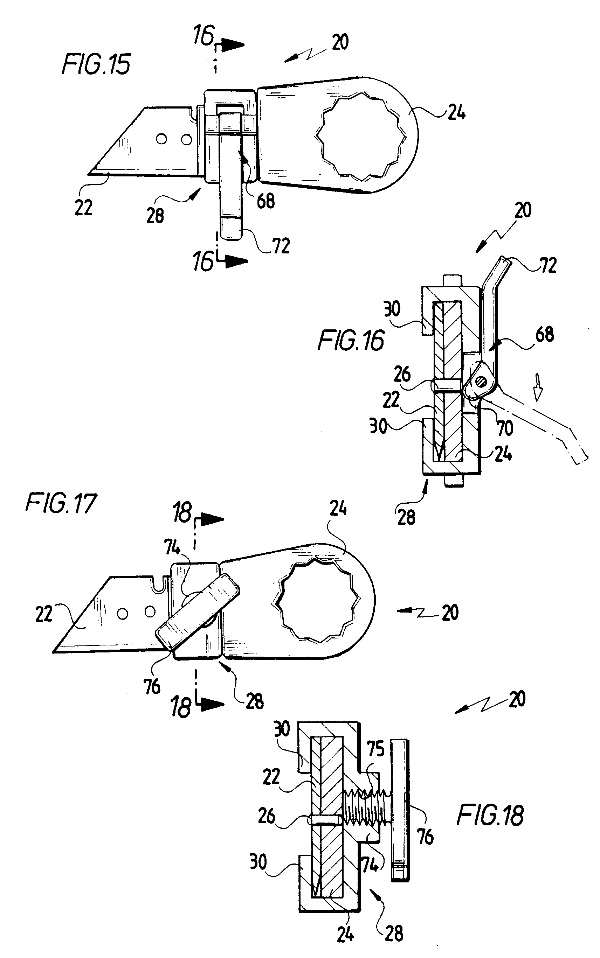

Eine weitere Variante des Schneidmessers 20 ist in den Figuren 9 und 10 gezeigt, wobei das Klingenteil 22 in drei Bereiche aufgegliedert ist, nämlich in eine eigentliche Klinge 52, eine Führung 53 und einen Endbereich 54. Die Führung 53 des Klingenteils 22 umfaßt hierbei hochgebogene Seitenbereiche 56, die das Halteteil 24 im Randbereich umfassen. Die bei der schwenkoszillierenden Bewegung des Schneidmessers 20 auftretenden Scherkräfte zwischen Halteteil 24 und Klingenteil 22 werden in der Hauptsache durch einen in das Halteteil 24 eingelassenen Stift 58 aufgenommen, der in eine Bohrung 59 im Klingenteil 22 eingreift. Der Endbereich 54 des Klingenteils 22 weist bei diesem Ausführungsbeispiel eine Mehrkantbohrung 25 auf, in die die Antriebswelle des Schneidwerkzeugs eingreift. Der entsprechende Endbereich des Halteteils 24, der diesen Endbereich 54 des Klingenteils 22 überlappt, kann ebenfalls eine Mehrkantbohrung aufweisen oder aber auch mit einer runden Bohrung versehen sein, in der ein entsprechendes Ende der Antriebswelle geführt ist. Eine entsprechende Führung von Klingenteil 22 und Halteteil 24 ist in den Figuren 13 und 14 dargestellt, wo Seitenbereiche 61 das Klingenteil 22 umgreifen und dieses plan auf dem Halteteil 24 haltern. Auch bei diesem Ausführungsbeispiel des erfindungsgemäßen Schneidmessers 20 wird eine Sicherung von Halteteil 24 gegenüber dem Klingenteil 22 bei der Montage des Schneidmessers an der Antriebswelle erreicht, indem beispielsweise bei dem in Fig. 13 dargestellten Beispiel sowohl das Klingenteil als auch das Halteteil fluchtende Mehrkantbohrungen aufweisen, in die die Antriebswelle des Schneidwerkzeugs gesteckt wird.

Figuren 13 und 14 zeigen zudem eine Variante mit einer U-förmig umgebogenen Klinge 52, die in bestimmten Anwendungsfällen bevorzugt wird.

Bei dem Ausführungsbeispiel gemäß den Figuren 11 und 12 wird die Führung des Klingenteils am Halteteil 24 über einen Haken 62 erreicht, der aus dem Klingenteil 22 ausgestanzt ist und in eine Öffnung 63 des Halteteils 24 eingreift. Halteteil 24 und Klingenteil 22 sind bei dieser Ausführungsform beide abgekröpft, und verlaufen im wesentlichen parallel zueinander. Die abgekröpften Bereiche 65, 66 von Klingenteil 22 und Halteteil 24 dienen hier zusätzlich zu dem Haken 62 der Fixierung des Klingenteils gegenüber dem Halteteil durch ein formschlüssiges Aneinanderliegen. Die die Antriebswelle des Schneidwerkzeugs aufnehmenden Bohrungen von Klingenteil und Halteteil sind wiederum als Mehrkant ausgeführt und dienen gleichzeitig als Mittel zur Sicherung der beiden Schneidmesserteile zueinander im montierten Zustand am Schneidwerkzeug.

Zusätzlich ist das Halteteil 24 mit einer Stützrolle 46 versehen, welche in einem dem Klingenteil 22 zugewandten Endbereich drehbar angeordnet ist.

Die Figuren 15 bis 18 zeigen schließlich noch weitere Ausführungsbeispiele der erfindungsgemäßen Schneidmesser, bei denen standardmäßige Teppichmesser als Klingenteile 22 verwendbar sind.

Der Aufbau dieser Schneidmesser 20 entspricht prinzipiell dem in Fig. 1 gezeigten. Das Teppichmesser oder Klingenteil 22 ist an dem Halteteil 24 über Stifte 26 gehalten. Das Halteteil 24 weist in den mit dem Klingenteil 22 überlappenden Bereich dieselbe Breite auf wie das Klingenteil 22. Ein Sicherungsbügel 28 überfängt in diesem überlappenden Bereich das Halteteil 24 und das Klingenteil 22 und verhindert ein Lösen des Klingenteils von den Stiften 26.

Zur Fixierung des Sicherungsbügels 28 am Messer 20 und damit zugleich des Klingenteils 22 am Halteteil 24 weist der in Fig. 15 und 16 dargestellte Bügel 28 einen Exzenterhebel 68 auf, der in der in Fig. 16 durchgehend gezeichneten Stellung mit seinem Nocken 70 das Halteteil 24 und die dagegen anliegende Klinge 22 gegen die Nasen 30 des Sicherungsbügels 28 drückt. Der Hebelarm 72 des Exzenterhebels 68 liegt dabei im wesentlichen flach auf dem Sicherungsbügel 28 auf.

In der in Fig. 16 dargestellten strichpunktierten Stellung läßt sich der Bügel 28 vom Halteteil 24 und Klingenteil 22 abziehen, so daß das Teppichmesser gewendet oder ausgetauscht werden kann.

Die in den Figuren 17 und 18 gezeigte Ausführungsform unterscheidet sich von der zuvor beschriebenen durch die Art und Weise, in der der Sicherungsbügel 28 fixiert wird. Hier ist an den Bügel 28 an dessen Oberseite ein Ansatz 74 angeformt, in den ein Innengewinde 75 eingearbeitet ist. Der Ansatz 74 mit dem Innengewinde nimmt eine Flügelschraube 76 auf, die im festgezogenen Zustand (Fig. 18) wie zuvor der Exzenterhebel 68 das Halteteil 24 gegen das anliegende Klingenteil 22 und die Nasen 30 des Bügels 28 drückt.

Zum Austauschen des Teppichmessers oder Klingenteils 22 braucht lediglich die Flügelschraube 76 gelöst zu werden, so daß der Bügel 28 von Halteteil 24 und Klingenteil 22 abgenommen werden kann.

Die in den Figuren gezeigten Messerformen sind selbstverständlich nur beispielhaft und können je nach Anwendungszweck auch anders gestaltet sein, beispielsweise wird in bestimmten Fällen ein sichelförmiges Aussehen der Messer bevorzugt.

Selbstverständlich kann auch bei den verschiedensten Ausführungsformen und nicht nur bei den dargestellten das Halteteil und/oder Klingenteil abgekröpft sein. Gleichfalls ist das Anbringen einer Stützrolle bei sämtlichen gezeigten Ausführungsformen möglich und nicht nur bei der in den Figuren 5 und 6 dargestellten.

Auch bei den Ausführungsformen, bei denen kein gesonderter Sicherungsclip notwendig ist und bei denen die Sicherung des Halteteils 24 gegenüber dem Klingenteil 22 durch die Montage an der Antriebswelle bereits gelöst ist, ist es möglich, einen Kunststoffclip im Bereich des Klingenteils 22 oder im Bereich der Überlappung von Halteteil 24 und Klingenteil 22 anzubringen, um einen Stützteil zur Führung des Messers an dem zu bearbeitenden Gegenstand zu verwirklichen.

Gleichzeitig ist ein Austausch der Führungs- und Sicherungselemente, wie z. B. die Haken-/Ösen-Kombinationen oder auch die seitlichen Führungen, in das Belieben des Fachmanns gestellt und nicht auf die in den Figuren gezeigten Ausführungsbeispiele beschränkt.

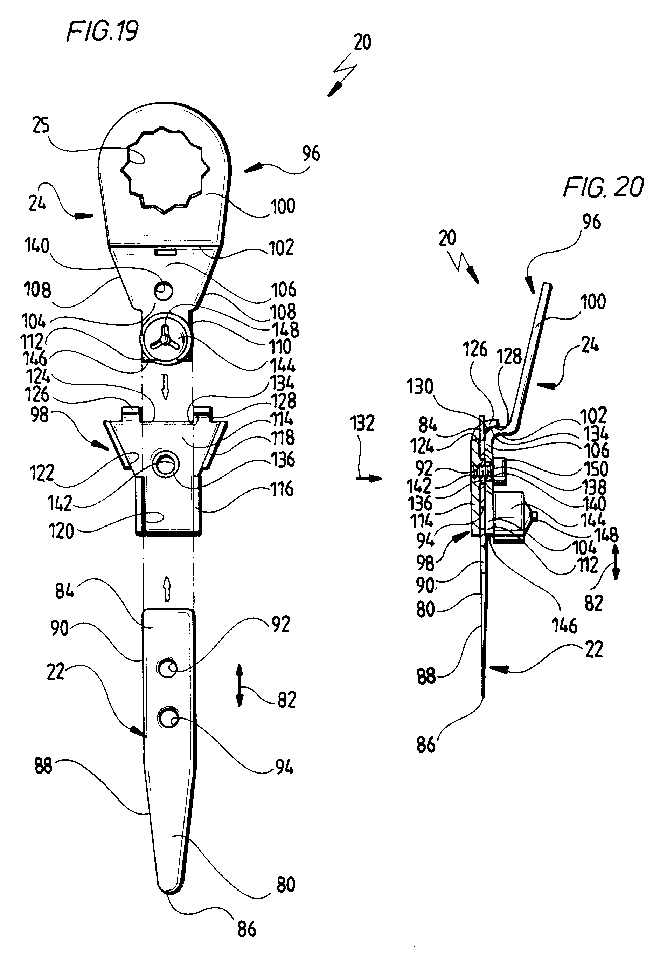

Ein zehntes Ausführungsbeispiel eines als Ganzes mit 20 bezeichneten erfindungsgemäßen Schneidmessers, dargestellt in den Figuren 19 und 20, umfaßt genau wie die bisherigen Ausführungsbeispiele ein Klingenteil 22 und ein Halteteil 24, wobei das Klingenteil 22 auswechselbar mit dem Halteteil 24 verbindbar ist.

Hierzu ist das Klingenteil 22 mit einem Schneidteil 80 versehen, welches in Längsrichtung 82 des Klingenteils 22 ausgehend von einem einstückig mit diesem verbundenen und auch mit diesem fluchtenden Fixierungsteil 84 ausgehend erstreckt. Das Schneidteil 80 ist dabei konisch zu einer Spitze 86 auslaufend ausgebildet und wahlweise entweder einseitig oder beidseitig mit einer Schneidkante 88 versehen.

Das sich gegenüberliegend der Spitze 86 an das Schneidteil 80 einstückig anschließende Fixierungsteil 84 ist aus Flachmaterial derselben Stärke wie das Schneidteil 80 hergestellt und hat die Form eines flachen Quaders mit zur Längsrichtung 82 und auch untereinander parallelen Längsseitenflächen 90.

Ferner ist das Fixierungsteil noch mit mittig zwischen den Längsseitenflächen angeordneten und in Längsrichtung 82 hintereinander liegenden kreisrunden Ausnehmungen 92 und 94 versehen.

Das Halteteil 24 umfaßt ein Basisteil 96 und ein mit dem Basisteil 96 verbindbares Auflageteil 98. Dabei weist das Basisteil 96 einen Befestigungsschenkel 100 auf, welcher die Mehrkantbohrung 25 zur Befestigung des Schneidmessers 20 an der Antriebswelle eines oszillierenden Schwingungsantriebs umfaßt. Ausgehend von dem Befestigungsschenkel 100 ist das Basisteil 96 zweifach gegensinnig umgebogen, so daß es einen gegenüber dem Befestigungsschenkel 100 umgebogenen Zwischenschenkel 102 sowie einen gegenüber dem Zwischenschenkel in einem Winkel von ungefähr 90° umgebogenen Halteschenkel 104 aufweist.

Auf das Basisteil 96 ist das Auflageteil 98 so aufsetzbar, daß es den Halteschenkel 104 im wesentlichen übergreift. Um nunmehr das Auflageteil 98 drehfest und formschlüssig mit dem Halteschenkel 104 zu verbinden, ist der Halteschenkel 104 in einem sich an dem Zwischenschenkel 102 anschließenden Mittelbereich 106 so ausgebildet, daß er konisch von dem Zwischenschenkel 102 weg auf einander zulaufende seitliche Formschlußflächen 108 aufweist, an welche sich parallel zueinander verlaufende Formschlußflächen 110 anschließen, welche einen Endbereich 112 des Halteschenkels 104 seitlich begrenzen.

Vorzugsweise ist das gesamte Basisteil 96 einstückig aus Flachmaterial ausgebildet, so daß die Formschlußflächen 108 und 110 des Halteschenkels durch die schmalen Seitenkanten des Flachmaterials gebildet werden.

Das Auflageteil 98 umfaßt eine ebenfalls aus Flachmaterial hergestellte Grundplatte 114, welche in ihrer Form im wesentlichen der Form des Halteschenkels 104 entspricht, mit dem Unterschied, daß seitlich der Grundplatte senkrecht zu deren Ebene abstehende vordere Haltefahnen 116 und hintere Haltefahnen 118 an diese angeformt sind. Aufgrund der im wesentlichen identischen Form der Grundplatte 114 mit dem Halteschenkel 104 verlaufen die vorderen Haltefahnen 116 parallel zueinander und die hinteren Haltefahnen 118 laufen in Richtung der vorderen Haltefahnen 116 konisch aufeinander zu. Somit bilden die vorderen Haltefahnen 116 auf ihren einander zugewandten Innenseiten vordere Formschlußflächen 120, welche dazu vorgesehen sind, sich formschlüssig an die Formschlußflächen 110 des Halteschenkels 104 anzulegen und die hinteren Haltefahnen 118 bilden an ihren einander zugewandten Innenflächen hintere Formschlußflächen 122, welche dazu vorgesehen sind, sich an die Formschlußflächen 108 des Halteschenkels 104 anzulegen, so daß insgesamt ein drehfester Formschluß zwischen dem Auflageteil 98 und dem Basisteil 96 im zusammengesetzten Zustand besteht.

Insbesondere um die hinteren Formschlußflächen 122 passend an die Formschlußflächen 108 anzulegen, weist das Auflageteil 98 zusätzlich an seiner im zusammengesetzten Zustand des Halteteils 24 ungefähr parallel zum Zwischenschenkel 102 verlaufenden Rückseite 124 noch Krallen 126 auf, welche mit ihren äußeren Enden 128 auf einer dem Anschlagteil zugewandten Rundungsfläche 130 des Basisteils 96 beim Übergang vom Halteschenkel 104 zum Zwischenschenkel 102 beim Aufsetzen des Auflageteils 98 in Aufsetzrichtung 132 zu gleiten in der Lage sind und somit bestrebt sind, das Auflageteil 98 in Richtung zum Zwischenschenkel 102 hin zu verschieben, so daß die sich in dieser Richtung erweiternden Formschlußflächen 122 und 108 aneinander spielfrei zur Anlage kommen. Um diese spielfreie Stellung zu erhalten, sind die Krallen 126 mit geringer Elastizität versehen, so daß sie nach dem Aufgleiten auf der Rundungsfläche 130 das Auflageteil 98 stets in dieser spielfreien Stellung zu halten in der Lage sind.

Das den Halteschenkel 104 übergreifende Auflageteil 98 bildet mit diesem zusammen eine Aufnahme für das Fixierungsteil 84 des Klingenteils 22, wobei das Fixierungsteil 84 zwischen dem Auflageteil 98 und dem Halteschenkel 104 zu liegen kommt. Die formschlüssige Aufnahme wird dabei einmal durch die vorderen Haltefahnen 116 gebildet, welche mit ihren unmittelbar über der Grundplatte 114 sich erhebenden Bereichen der vorderen Formschlußflächen 120 Anschlagflächen bilden, die mit den Längsseitenflächen 90 des Fixierungsteils zusammenwirken. Darüber hinaus sind die Krallen 126 in einem derartigen Abstand voneinander angeordnet, daß ihre einander zugewandten Innenflächen weitere Anschlagflächen 134 bilden, zwischen denen die Längsseitenflächen 90 des Fixierungsteils 84 im zusammengesetzten Zustand liegen.

Um das Fixierungsteil 84 in Längsrichtung im Auflageteil 98 festzulegen, ist dieses mit einem sich von der Grundplatte 114 erhebenden Ringwulst 136 versehen, dessen Außenfläche in die Ausnehmung 92 oder 94 paßt. Das Fixierungsteil 84 wird durch den Ringwulst 136, unabhängig davon, ob dieser in die Ausnehmung 92 oder die Ausnehmung 94 eingreift, stets so im Auflageteil in Längsrichtung 82 festgelegt, daß die Längsseitenflächen 90 sowohl an den vorderen Formschlußflächen 120 als auch an den Anschlagflächen 134 zwischen den Krallen 126 anliegen.

Zum Zusammenbau wird nun zunächst das Klingenteil 22 mit dem Fixierungsteil 84 in das Auflageteil 98 gelegt, so daß der Ringwulst 136 entweder die Ausnehmung 92 oder die Ausnehmung 94 durchgreift und anschließend wird das Basisteil 96 so aufgesetzt, daß der Halteschenkel 104 das Fixierungsteil 84 gegen die Grundplatte 114 des Auflageteils 98 drückt. Um das Fixierungsteil 84 zwischen der Grundplatte 114 und dem Halteschenkel 104 einzuspannen und das Auflageteil 98 fest mit dem Halteschenkel 104 zu verbinden, ist eine Schraube 138 vorgesehen, welche den Halteschenkel 104 in einer Bohrung 140 durchsetzt und mit ihrem Gewinde in ein in eine Innenseite des Ringwulsts 136 geschnittenes Innengewinde 142 einschraubbar ist. Hierzu ist die Höhe, mit welcher sich der Ringwulst 136 von der Grundplatte 114 erhebt, so zu bemessen, daß er bei aufgelegtem Fixierungsteil 84 nicht über dieses in Richtung des Halteschenkels 104 übersteht.

Wie sich aus Fig. 20 ergibt, wird vorzugsweise das Auflageteil 98 auf der Seite des Halteschenkels 104 aufgelegt, welche entgegengesetzt zu der Richtung liegt, in welcher sich der Zwischenschenkel 102 vom Halteschenkel 104 erhebt.

Um noch eine zusätzliche Abstützung des zehnten Ausführungsbeispiels des Schneidmessers zu ermöglichen, ist im Endbereich 112 des Halteschenkels 104 eine Stützrolle 144 vorgesehen, welche über eine der Spitze 86 des Klingenteils 22 zugewandte Vorderkante 146 des Endbereichs 112 übersteht und an einem Zapfen 148 drehbar gelagert ist, welcher sich von dem Halteschenkel 104 in gleicher Richtung wie der Zwischenschenkel 102 erhebt.

Durch die Anordnung der Stützrolle 144 und der Schraube 138 mit ihrem Kopf 150 auf der Seite, auf welcher sich auch der Zwischenschenkel 102 von dem Halteschenkel 104 erhebt, ist sichergestellt, daß das erfindungsgemäße Schneidmesser 20 ohne in störender Weise an der Kraftfahrzeugkarosserie anzuschlagen, einsetzbar ist.

## Patentansprüche

1. Schneidmesser für ein Schneidwerkzeug mit einem schwenkoszillierenden Antrieb, insbesondere zum Durchtrennen von Fugendichtungen oder Isolierungen bei Glasscheiben, wobei das Schneidmesser ein Halteteil zur Befestigung an einer Antriebswelle und ein Klingenteil umfaßt,
**dadurch gekennzeichnet**,
daß das Klingenteil (22) an dem Halteteil (24) auswechselbar befestigt ist.

2. Schneidmesser nach Anspruch 1, dadurch gekennzeichnet, daß das Klingenteil (22) an dem dem Antrieb abgewandten Ende des Halteteils (24) befestigbar ist.

3. Schneidmesser nach Anspruch 1, dadurch gekennzeichnet, daß das Klingenteil (22) einen Endbereich (54) aufweist, der mit dem Halteteil (24) überlappt und eine Bohrung (25) zur Aufnahme der Antriebswelle aufweist, und daß das Halteteil (24) gleichfalls mit einer Bohrung zur Aufnahme der Antriebswelle versehen ist.

4. Schneidmesser nach Anspruch 1, dadurch gekennzeichnet, daß das Klingenteil (22) mittels eines Zwischenstücks (32) an dem Halteteil (24) befestigbar ist.

5. Schneidmesser nach einem oder mehreren der voranstehenden Ansprüche, dadurch gekennzeichnet, daß das Schneidmesser (20) benachbart zum Schneidteil des Klingenteils (22) einen Stützanschlag (46), insbesondere aus weichem Material, aufweist.

6. Schneidmesser nach einem oder mehreren der voranstehenden Ansprüche, dadurch gekennzeichnet, daß das Schneidmesser (20) in Längsrichtung zweimal gegenläufig abgewinkelt ist.

7. Schneidmesser nach einem oder mehreren der Ansprüche 1 bis 5, dadurch gekennzeichnet, daß das Schneidmesser (20) in Längsrichtung U-förmig gebogen ist.

8. Schneidmesser nach einem oder mehreren der voranstehenden Ansprüche, dadurch gekennzeichnet, daß das Klingenteil (22) und das Halteteil (24) mittels eines Führungselementes (42,56,61,62) und eines Sicherungselementes (45,50) miteinander verbunden sind.

9. Schneidmesser nach Anspruch 8, dadurch gekennzeichnet, daß das Führungselement (56,61) einstückig mit dem Klingenteil (22) oder dem Halteteil (24) ausgebildet ist.

10. Schneidmesser nach einem der Ansprüche 8 oder 9, dadurch gekennzeichnet, daß das Sicherungselement einstückig mit dem Klingenteil oder dem Halteteil ausgebildet ist.

11. Schneidmesser nach einem oder mehreren der Ansprüche 8 bis 10, dadurch gekennzeichnet, daß die Führungselemente (56,61) längsseitig an das Klingenteil (22) oder an das Halteteil (24) angeformt sind und das jeweils andere Teil zumindest im Randbereich umgreifen und in Längsrichtung verschieblich halten.

12. Schneidmesser nach einem oder mehreren der Ansprüche 8 bis 10, dadurch gekennzeichnet, daß die Führungselemente Hakenteile (42,62) am Halte- oder Klingenteil (24;22) umfassen, die in Ausnehmungen (43,63) im jeweils anderen Teil eingreifen.

13. Schneidmesser nach einem oder mehreren der voranstehenden Ansprüche, dadurch gekennzeichnet, daß das Halteteil (24) und/oder Klingenteil (22) konisch ausgebildet sind, wobei das verjüngte Ende zur Messerspitze hinweist.

14. Schneidmesser nach einem oder mehreren der Ansprüche 8 bis 13, dadurch gekennzeichnet, daß das Sicherungselement (50) im Überlappungsbereich von Halteteil (24) und Klingenteil (22) rastbar befestigbar ist, wobei das Sicherungselement (50) das Halte- und das Klingenteil umgreift.

15. Schneidmesser nach einem oder mehreren der Ansprüche 8 bis 14, dadurch gekennzeichnet, daß das Sicherungselement (50) den Stützanschlag bildet.

16. Schneidmesser nach einem der voranstehenden Ansprüche, dadurch gekennzeichnet, daß das Halteteil (24) eine formschlüssige Aufnahme (96,98) für ein Fixierungsteil (84) des Klingenteils (22) aufweist.

17. Schneidmesser nach Anspruch 16, dadurch gekennzeichnet, daß die Aufnahme (96,98) das Fixierungsteil (84) drehfest lagert.

18. Schneidmesser nach Anspruch 16 oder 17, dadurch gekennzeichnet, daß die Aufnahme (96,98) das Fixierungsteil (84) an mindestens zwei in Längsrichtung (82) des Klingenteils (22) im Abstand voneinander angeordneten Punkten abstützt.

19. Schneidmesser nach einem der Ansprüche 16 bis 18, dadurch gekennzeichnet, daß die Aufnahme (96,98) einen eine Ausnehmung (92,94) im Fixierungsteil (84) durchgreifenden Vorsprung (136) aufweist.

20. Schneidmesser nach einem der Ansprüche 16 bis 19, dadurch gekennzeichnet, daß die Aufnahme (96,98) an Längsseitenflächen (90) des Fixierungsteils (84) anliegende Anschlagflächen (120,134) aufweist.

21. Schneidmesser nach Anspruch 20, dadurch gekennzeichnet, daß das Fixierungsteil (84) von den Anschlagflächen (120,134) paßgenau gehalten ist.

22. Schneidmesser nach einem der Ansprüche 16 bis 21, dadurch gekennzeichnet, daß das Klingenteil (22) in der Aufnahme (96,98) in zwei unterschiedlichen Stellungen einsetzbar ist.

23. Schneidmesser nach Anspruch 22, dadurch gekennzeichnet, daß das Klingenteil (22) mit unterschiedlicher Erstreckung von dem Halteteil (24) weg in die Aufnahme (96,98) einsetzbar ist.

24. Schneidmesser nach einem der Ansprüche 16 bis 23, dadurch gekennzeichnet, daß die Aufnahme durch ein Basisteil (96) des Halteteils (24) und einem auf dem Basisteil (96) befestigbaren Auflageteil (98) gebildet ist und daß das Klingenteil (22) zwischen dem Auflageteil (98) und dem Basisteil (96) fixierbar ist.

25. Schneidmesser nach Anspruch 24, dadurch gekennzeichnet, daß das Basisteil (96) und das Auflageteil (98) durch Formschluß drehfest verbindbar sind.

26. Schneidmesser nach Anspruch 25, dadurch gekennzeichnet, daß der Formschluß mittels parallel zur Längsrichtung (82) des Klingenteils (22) und parallel zueinander verlaufender Formschlußflächen (110,120) erfolgt.

27. Schneidmesser nach Anspruch 25 oder 26, dadurch gekennzeichnet, daß der Formschluß mittels in Längsrichtung (82) des Klingenteils (22) konisch zueinander verlaufender Formschlußflächen (108,122) erfolgt.

28. Schneidmesser nach Anspruch 26 oder 27, dadurch gekennzeichnet, daß die Formschlußflächen (110,120;108,122) durch eine am Basisteil (96) oder am Auflageteil (98) angeordnete Schrägfläche (130) und ein am Auflageteil (98) oder am Basisteil (96) angeordnetes Gleitteil (126) in Richtung eines Paßsitzes beaufschlagbar sind.

29. Schneidmesser nach Anspruch 28, dadurch gekennzeichnet, daß die Schrägfläche (130) schräg zu einer Aufsetzrichtung (132) des Auflageteils (98) verläuft.

30. Schneidmesser nach Anspruch 28 oder 29, dadurch gekennzeichnet, daß das auf die Schrägfläche (130) aufgleitende Gleitteil (126) elastisch deformierbar ist.

31. Schneidmesser nach einem der Ansprüche 5-30, dadurch gekennzeichnet, daß das Halteteil (24) den Stützanschlag (144) trägt.

32. Schneidmesser nach Anspruch 31, dadurch gekennzeichnet, daß der Stützanschlag (144) vom Basisteil (96) getragen ist.

## Claims

1. Cutting knife for a cutting tool having a pivot-oscillating drive, especially for severing joint seals or insulations in glass panes, the cutting knife comprising a holding part for fastening to a drive shaft and a blade part, characterised in that the blade part (22) is fastened exchangeably to the holding part (24).

2. Cutting knife according to claim 1, characterised in that the blade part (22) can be fastened to the end of the holding part (24) facing away from the drive.

3. Cutting knife according to claim 1, characterised in that the blade part (22) has an end region (54) which overlaps with the holding part (24) and which has a bore (25) for receiving the drive shaft, and in that the holding part (24) is likewise provided with a bore for receiving the drive shaft.

4. Cutting knife according to claim 1, characterised in that the blade part (22) can be fastened to the holding part (24) by means of an intermediate piece (32).

5. Cutting knife according to one or more of the preceding claims, characterised in that the cutting knife (20) has a supporting stop (46), especially made of soft material, adjacent to the cutting part of the blade part (22).

6. Cutting knife according to one or more of the preceding claims, characterised in that the cutting knife (20) is oppositely angled twice in the longitudinal direction.

7. Cutting knife according to one or more of the preceding claims, characterised in that the cutting knife (20) is bent in U-shaped manner in the longitudinal direction.

8. Cutting knife according to one or more of the preceding claims, characterised in that the blade part (22) and the holding part (24) are connected to one another by means of a guide element (42, 56, 61, 62) and a securing element (45, 50).

9. Cutting knife according to claim 8, characterised in that the guide element (56, 61) is made in one piece with the blade part (22) or with the holding part (24).

10. Cutting knife according to one of claims 8 or 9, characterised in that the securing element is made in one piece with the blade part or with the holding part.

11. Cutting knife according to one or more of claims 8 to 10, characterised in that the guide elements (56, 61) are formed on the blade part (22) or on the holding part (24) on the longitudinal side and surround the other respective part at least in the edge region and hold it displaceably in the longitudinal direction.

12. Cutting knife according to one or more of claims 8 to 10, characterised in that the guide elements comprise hook parts (42, 62) on the holding part or blade part (24; 22) which engage into recesses (43, 63) in the other respective part.

13. Cutting knife according to one or more of the preceding claims, characterised in that the holding part (24) and/or the blade part (22) are made conical, the tapered end pointing towards the knife tip.

14. Cutting knife according to one or more of claims 8 to 13, characterised in that the securing element (50) can be fastened lockably in the overlap region of the holding part (24) and blade part (22), the securing element (50) surrounding the holding part and the blade part.

15. Cutting knife according to one or more of claims 8 to 14, characterised in that the securing element (50) forms the supporting stop.

16. Cutting knife according to one of the preceding claims, characterised in that the holding part (24) has a positive receptacle (96, 98) for a fixing part (84) of the blade part (22).

17. Cutting knife according to claim 16, characterised in that the receptacle (96, 98) supports the fixing part (84) fixedly in terms of rotation.

18. Cutting knife according to claim 16 or 17, characterised in that the receptacle (96, 98) supports the fixing part (84) at at least two points arranged at a distance from one another in the longitudinal direction (82) of the blade part (22).

19. Cutting knife according to one of claims 16 to 18, characterised in that the receptacle (96, 98) has a projection (136) passing through a recess (92, 94) in the fixing part (84).

20. Cutting knife according to one of claims 16 to 19, characterised in that the receptacle (96, 98) has stop faces (120, 134) bearing against longitudinal side faces (90) of the fixing part (84).

21. Cutting knife according to claim 20, characterised in that the fixing part (84) is held with an exact fit by the stop faces (120, 134).

22. Cutting knife according to one of claims 16 to 21, characterised in that the blade part (22) can be inserted in the receptacle (96, 98) in two different positions.

23. Cutting knife according to claim 22, characterised in that the blade part (22) can be inserted into the receptacle (96, 98) with a differing extension away from the holding part (24).

24. Cutting knife according to one of claims 16 to 23, characterised in that the receptacle is formed by a basic part (96) of the holding part (24) and a bearing part (98) fastenable to the basic part (96), and in that the blade part (22) can be fixed between the bearing part (98) and the basic part (96).

25. Cutting knife according to claim 24, characterised in that the basic part (96) and the bearing part (98) can be positively connected fixedly in terms of rotation.

26. Cutting knife according to claim 25, characterised in that the positive connection is made by means of positive-connection faces (110, 120) extending parallel to the longitudinal direction (82) of the blade part (22) and parallel to one another.

27. Cutting knife according to claim 25 or 26, characterised in that the positive connection is made by means of positive-connection faces (108, 122) extending conically to one another in the longitudinal direction (82) of the blade part (22).

28. Cutting knife according to claim 26 or 27, characterised in that the positive-connection faces (110, 120; 108, 122) can be loaded in the direction of a snug fit by an oblique face (130) arranged on the basic part (96) or on the bearing part (98) and by a sliding part (126) arranged on the bearing part (98) or on the basic part (96).

29. Cutting knife according to claim 28, characterised in that the oblique face (130) extends obliquely relative to a direction (132) of attachment of the bearing part (98).

30. Cutting knife according to claim 28 or 29, characterised in that the sliding part (126) sliding on the oblique face (130) is elastically deformable.

31. Cutting knife according to one of claims 5 to 30, characterised in that the holding part (24) carries the supporting stop (144).

32. Cutting knife according to claim 31, characterised in that the supporting stop (144) is carried by the basic part (96).

## Revendications

1. Couteau de coupe pour un outil de coupe avec un entraînement rotatif oscillant, en particulier pour le détachement de garnitures de joints ou d'isolations pour des vitres, le couteau de coupe comprenant une partie de maintien pour la fixation sur un arbre d'entraînement et une partie formant lame, caractérisé en ce que la partie formant lame (22) est fixée de manière interchangeable sur la partie de maintien (24).

2. Couteau de coupe selon la revendication 1, caractérisé en ce que la partie formant lame (22) est apte à être fixée sur l'extrémité de la partie de maintien (24) opposée à l'entraînement.

3. Couteau de coupe selon la revendication 1, caractérisé en ce que la partie formant lame (22) présente un secteur d'extrémité (54) qui chevauche la partie de maintien (24) et présente un trou (25) pour la réception de l'arbre d'entraînement, et en ce que la partie de maintien (24) est également pourvue d'un trou pour la réception de l'arbre d'entraînement.

4. Couteau de coupe selon la revendication 1, caractérisé en ce que la partie formant lame (22) est apte à être fixée sur la partie de maintien (24) au moyen d'une pièce intercalaire (32).

5. Couteau de coupe selon l'une ou plusieurs des revendications précédentes, caractérisé en ce que le couteau de coupe (20) présente à proximité de la partie formant tranchant de la partie formant lame (22) une butée d'appui (46), en particulier en matériau souple.

6. Couteau de coupe selon l'une ou plusieurs des revendications précédentes, caractérisé en ce que le couteau de coupe (20) est coudé deux fois en sens opposés dans le sens longitudinal.

7. Couteau de coupe selon l'une ou plusieurs des revendications 1 à 5, caractérisé en ce que le couteau de coupe (20) est replié en U dans le sens longitudinal.

8. Couteau de coupe selon l'une ou plusieurs des revendications précédentes, caractérisé en ce que la partie formant lame (22) et la partie de maintien (24) sont reliées au moyen d'un élément de guidage (42, 56, 61, 62) et d'un élément de blocage (45, 50).

9. Couteau de coupe selon la revendication 8, caractérisé en ce que l'élément de guidage (56, 51) est formé d'un seul tenant avec la partie formant lame (22) ou la partie de maintien (24).

10. Couteau de coupe selon l'une des revendications 8 ou 9, caractérisé en ce que l'élément de blocage est formé d'un seul tenant avec la partie formant lame ou la partie de maintien.

11. Couteau de coupe selon l'une ou plusieurs des revendications 8 à 10, caractérisé en ce que les éléments de guidage (56, 61) sont formés longitudinalement sur la partie formant lame (22) ou sur la partie de maintien (24) et entourent l'autre partie au moins dans la région du bord et la maintiennent de manière mobile dans le sens longitudinal.

12. Couteau de coupe selon l'une ou plusieurs des revendications 8 à 10, caractérisé en ce que les éléments de guidage comprennent des parties formant crochet (42, 62) sur la partie de maintien ou la partie formant lame (24 ; 22), qui se mettent en prise dans des évidements (43, 63) de l'autre partie.

13. Couteau de coupe selon l'une ou plusieurs des revendications précédentes, caractérisé en ce que la partie de maintien (24) et/ou la partie formant lame (22) sont réalisées avec une forme conique, l'extrémité rétrécie étant orientée vers la pointe du couteau.

14. Couteau de coupe selon l'une ou plusieurs des revendications 8 à 13, caractérisé en ce que l'élément de blocage (50) peut être fixé par enclenchement dans la région de chevauchement de la partie de maintien (24) et de la partie formant lame (22), l'élément de blocage (50) entourant la partie de maintien et la partie formant lame.

15. Couteau de coupe selon l'une ou plusieurs des revendications 8 à 14, caractérisé en ce que l'élément de blocage (50) forme la butée d'appui.

16. Couteau de coupe selon l'une quelconque des revendications précédentes, caractérisé en ce que la partie de maintien (24) présente un récepteur (96, 98) avec engagement positif pour une partie de fixation (84) de la partie formant lame (22).

17. Couteau de coupe selon la revendication 16, caractérisé en ce que le récepteur (96, 98) supporte la partie de fixation (84) de manière fixe en rotation.

18. Couteau de coupe selon la revendication 16 ou 17, caractérisé en ce que le récepteur (96, 98) soutient la partie de fixation (84) en au moins deux points disposés à distance l'un de l'autre dans le sens longitudinal (82) de la partie formant lame (22).

19. Couteau de coupe selon l'une quelconque des revendications 16 à 18, caractérisé en ce que le récepteur (96, 98) présente une saillie (136) entourant un évidement (92, 94) dans la partie de fixation (84).

20. Couteau de coupe selon l'une quelconque des revendications 16 à 19, caractérisé en ce que le récepteur (96, 98) présente, pour des surfaces latérales longitudinales (90) de la partie de fixation (84), des surfaces de butée (120, 134) adjacentes.

21. Couteau de coupe selon la revendication 20, caractérisé en ce que la partie de fixation (84) est maintenue avec un ajustement précis par les surfaces de butée (120, 134).

22. Couteau de coupe selon l'une quelconque des revendications 16 à 21, caractérisé en ce que la partie formant lame (22) est apte à être installée dans le récepteur (96, 98) dans deux positions différentes.

23. Couteau de coupe selon la revendication 22, caractérisé en ce que la partie formant lame (22) est apte à être installée dans le récepteur (96, 98) avec une extension différente à partir de la partie de maintien (24).

24. Couteau de coupe selon l'une quelconque des revendications 16 à 23, caractérisé en ce que le récepteur est formé par une pièce de base (96) de la partie de maintien (24) et par une pièce d'appui (98) apte à être fixée sur la pièce de base (96) et en ce que la partie formant lame (22) est apte à être fixée entre la pièce d'appui (98) et la pièce de base (96).

25. Couteau de coupe selon la revendication 24, caractérisé en ce que la pièce de base (96) et la pièce d'appui (98) sont aptes à être reliées de manière fixe en rotation par engagement positif.

26. Couteau de coupe selon la revendication 25, caractérisé en ce que l'engagement positif se fait au moyen de surfaces d'engagement positif (110, 120) parallèles au sens longitudinal (82) de la partie formant lame (22) et parallèles les unes aux autres.

27. Couteau de coupe selon la revendication 25 ou 26, caractérisé en ce que l'engagement positif se fait au moyen de surfaces d'engagement positif (108, 122) se rapprochant l'une de l'autre de façon conique dans le sens longitudinal (82) de la partie formant lame (22).

28. Couteau de coupe selon la revendication 26 ou 27, caractérisé en ce que les surfaces d'engagement positif (110, 120 ; 108, 122) sont aptes à être sollicitées par une surface oblique (130) disposée sur la pièce de base (96) ou sur la pièce d'appui (98) et une partie coulissante (126) disposée sur la pièce d'appui (98) ou la pièce de base (96), dans le sens d'un ajustement fin.

29. Couteau de coupe selon la revendication 28, caractérisé en ce que la surface oblique (130) est inclinée par rapport à une direction de pose (132) de la pièce d'appui (98).

30. Couteau de coupe selon la revendication 28 ou 29, caractérisé en ce que la partie coulissante (126) coulissant sur la surface oblique (130) est déformable de manière élastique.

31. Couteau de coupe selon l'une quelconque des revendications 5 à 30, caractérisé en ce que la partie de maintien (24) porte la butée d'appui (144).

32. Couteau de coupe selon la revendication 31, caractérisé en ce que la butée d'appui (144) est portée par la pièce de base (96).
